**Europäisches Patentamt**

**European Patent Office**

**Office européen des brevets**

(19)

(11) Publication number : **0 335 656 B1**

# EUROPEAN PATENT SPECIFICATION

(12)

(45) Date of publication of patent specification :
23.09.92 Bulletin 92/39

(51) Int. Cl.⁵ : **H04N 5/232, G03B 3/10**

(21) Application number : **89303042.9**

(22) Date of filing : **28.03.89**

(54) **Automatic focus control apparatus.**

(30) Priority : **29.03.88 JP 77545/88**

(43) Date of publication of application :
**04.10.89 Bulletin 89/40**

(45) Publication of the grant of the patent :
**23.09.92 Bulletin 92/39**

(84) Designated Contracting States :
**DE FR GB NL**

(56) References cited :
**EP-A- 0 260 990**
**DE-A- 3 443 558**

(73) Proprietor : **SONY CORPORATION**
**7-35 Kitashinagawa 6-chome Shinagawa-ku**
**Tokyo 141 (JP)**

(72) Inventor : **Yoshida, Masanobu c/o Patents**
**Division**
**c/o Sony Corporation 6-7-35 Kitashinagawa**
**Shinagawa-ku Tokyo 141 (JP)**

(74) Representative : **Thomas, Christopher Hugo et**
**al**
**D Young & Co 10 Staple Inn**
**London WC1V 7RD (GB)**

## Description

This invention relates to automatic focus control apparatus. Embodiments of the invention are particularly, but not exclusively, suitable for use in auto-focus television cameras.

Apparatus that detects the focus of a lens by detecting the contrast of a picked-up image is known (see Japanese patent application no. 62/146628, published 19. 12. 1988 under no. 63-310281). Such apparatus uses the fact that the picked-up image has the best contrast when it is in focus. This focused position of a lens will hereinafter be referred to as the properly-focused position.

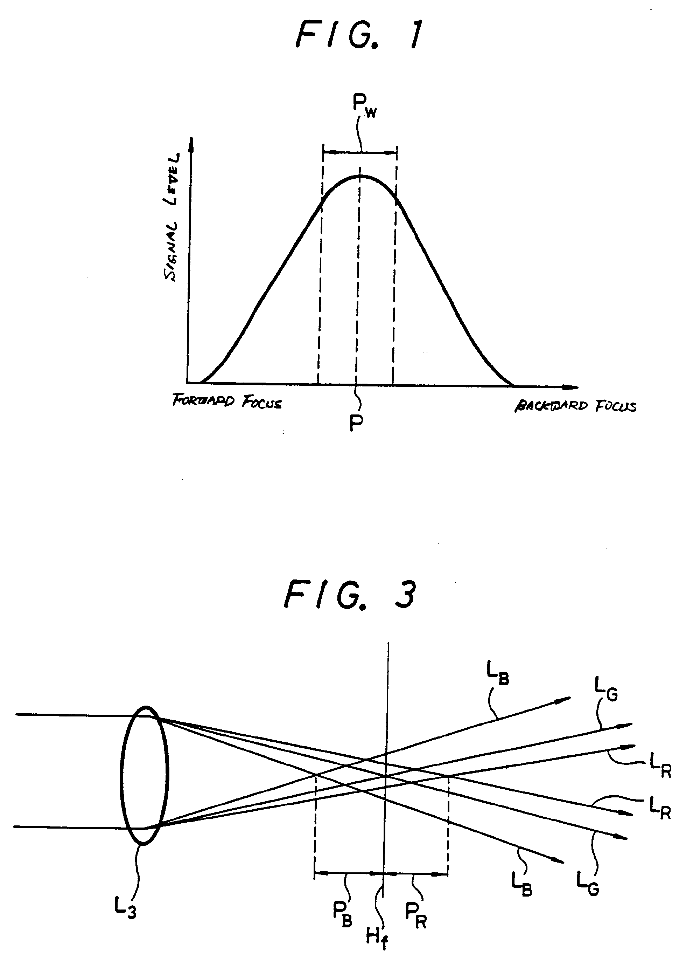

Accordingly, as shown in Figure 1, a properly-focused position P for an object can be detected by detecting the position of the lens at which an output signal from an image pick-up element has a maximum amplitude value.

In a television camera using this principle, the lens is moved away from its position closest to the object while sequentially detecting the amplitude values of the output signals, whereby the television camera can capture the properly-focused position P by detecting the position at which the change from the increase to decrease takes place in the amplitude value. Therefore, by adjusting the position of the lens on the basis of the detected result, it is possible to focus the object properly.

Moreover, in the television camera, once the properly-focused state has been established, the position of the lens is vibrated back and forth around the properly-focused position P by a predetermined amount $P_W$ (hereinafter, this vibrating movement is referred to as wobble) so that any change in the properly-focused position P can be detected regardless of the change of the properly-focused position P due to movement of the object. Thus, the position of the lens is adjusted on the basis of the detected result, thus making it possible to follow movement of the object while maintaining the properly-focused state.

This kind of auto-focused apparatus, however, has a defect. Thus because the position of the lens is wobbled around the properly-focused position P by the predetermined amount $P_W$, the picked-up image is also wobbled unnaturally, resulting in the quality of the picked-up image being deteriorated.

To solve this problem it has been proposed to wobble the position of the image pick-up element instead of the position of the lens. In this case, although the picked-up image can be prevented from being unnaturally wobbled, and the properly-focused condition can be achieved, a driving mechanism such as an actuator is required to wobble the image pick-up element, and in consequence the overall arrangement of the auto-focus apparatus becomes complicated.

Moreover, if the image pick-up element is wobbled as described above, the picked-up image is repeatedly caused to lose focus, so again the image quality is deteriorated. Accordingly, the image pick-up element has to be wobbled at sufficiently low frequency for the deteriorated quality of picked-up image not to be conspicuous to a viewer, but it is not then possible to maintain focus on a fast-moving object.

According to the present invention there is provided an automatic focus control apparatus characterized by:

lens means having chromatic aberration;

means for converting an optical signal obtained through said lens means to an electrical signal;

means for processing said electrical signal to obtain a plurality of primary colour signals;

means for detecting the amplitude level of each of said primary colour signals;

means for generating a control signal according to levels of said primary colour signals derived from said level detecting means; and

means for controlling the position of said lens in response to said control signal.

The invention will now be described by way of example with reference to the accompanying drawings, throughout which like parts are referred to by like references, and in which:

Figure 1 is a graph used to explain a known auto-focus apparatus;

Figure 2 is a schematic in block diagram form of an auto-focus apparatus embodying the present invention; and

Figures 3 to 6 show a diagram, a graph, a table and a flow chart, respectively, used to explain the operation of the apparatus of Figure 2.

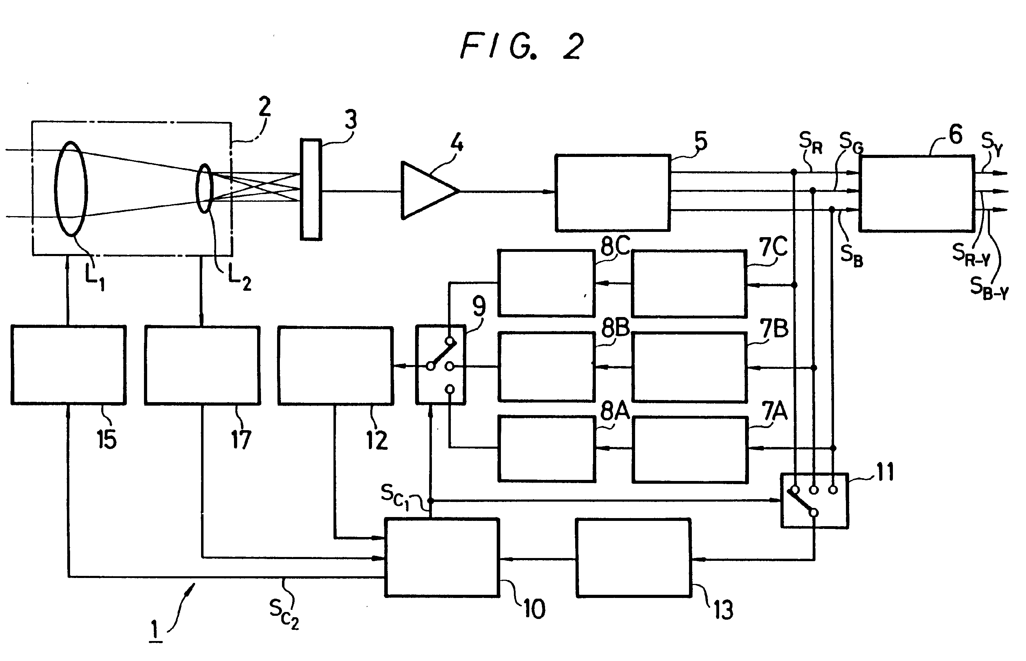

Figure 2 shows an embodiment of auto-focus apparatus 1 for use with a television camera, the apparatus comprising a zoom lens 2, in which $L_1$ and $L_2$ designate lens groups thereof, which picks up an image of an object (not shown). The zoom lens 2 is arranged to have a predetermined, very small amount of a chromatic aberration, so that it will not deteriorate the quality of the picked-up image.

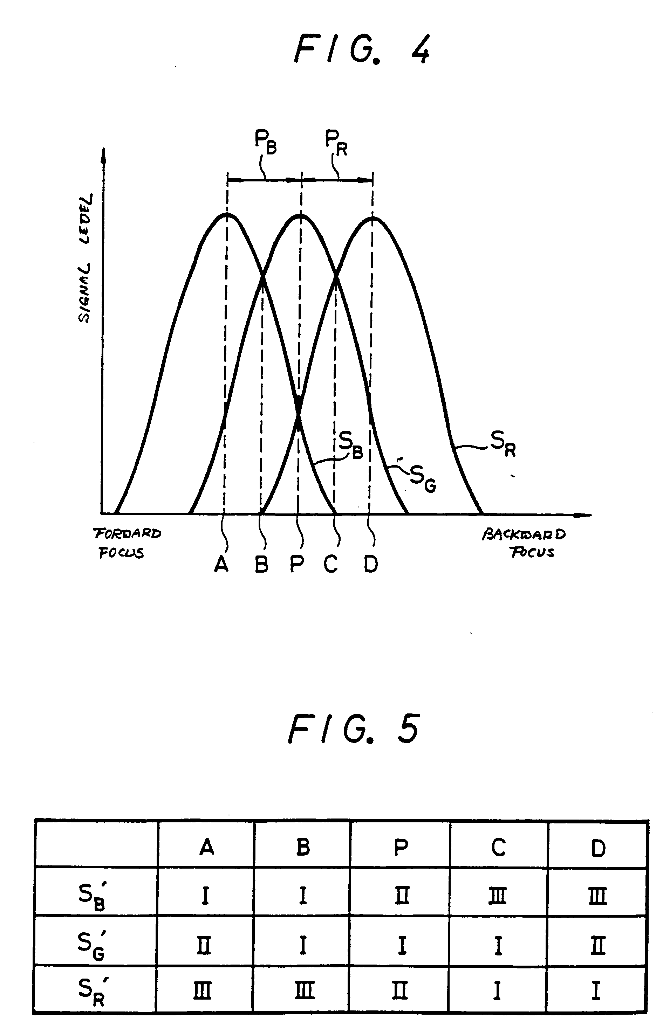

As shown in Figure 3, when green light $L_G$ is focused on a target screen $H_f$ of an image pick-up element 3 (Figure 2), blue light $L_B$ is focused at a position displaced towards the zoom lens 2 (or lens $L_3$) from the target screen $H_f$ by a predetermined very short distance $P_B$ (this position will hereinafter be referred to as a forward focus side) while red light $L_R$ is focused at a position displaced in the opposite direction, that is, towards the image pick-up element 3, from the target screen $H_f$ by a predetermined very short distance $P_R$ (this position will hereinafter be referred to as a backward focus side). In this case, $P_B$ is selected to be equal to $P_R$.

With this arrangement, as shown in Figure 4, when amplitude values of blue, green and red signals $S_B$, $S_G$ and $S_R$ from the image pick-up element 3 are detected by varying the focus position of the zoom lens 2 towards the forward and backward focus sides, the green signal $S_G$ has the maximum signal level at the properly-focused position P of green light $L_G$, while the blue and red signals $S_B$ and $S_R$ have the maximum signal levels at the forward and backward sides with respect to the properly-focused position P as represented by A and D in Figure 4, respectively.

The properly-focused condition can therefore be achieved by adjusting the position of the zoom lens 2 in such a manner that the amplitude value of the green signal $S_G$ becomes larger than those of the blue and red signals $S_B$ and $S_R$.

To be more specific, referring back to Figure 2, in the auto-focus apparatus 1, the output signal from the image pick-up element 3 is supplied through a preamplifying circuit 4 to a signal processing circuit 5, in which it is processed to form the blue, green and red signals $S_B$, $S_G$ and $S_R$ which are supplied to a matrix circuit 6, in which they are processed to form a luminance signal Y and two colour difference signals $S_{R-Y}$ and $S_{B-Y}$.

Band-pass filter circuits 7A, 7B and 7C, each of which has a frequency range of from 500 kHz to 2 MHz, receive the blue, green and red signals $S_B$, $S_G$ and $S_R$ and extract alternating current components therefrom. Detecting circuits 8A, 8B and 8C, connected to the band-pass filter circuits 7A, 7B and 7C, respectively, envelope-detect the output signals from the band-pass filter circuits 7A, 7B and 7C, respectively. The amplitude value signals of the colour signals $S_B$, $S_G$ and $S_R$ therefrom are supplied to a selector switch 9. The output of the selector switch 9 is supplied to an auto-focus control circuit 10 through an analogue-to-digital (A/D) converter 12. The colour signals $S_B$, $S_G$ and $S_R$ are also supplied to a selector switch 11 whose output is converted by an A/D converter 13 to a digital signal which is supplied to the auto-focus control circuit 10.

The auto-focus control circuit 10, which comprises a computer processing circuit such as a microprocessor, supplies a switching signal $S_{CI}$ to the selector switches 9 and 11. Thus, the auto-focus control circuit 10 is sequentially supplied with the output signals of the detecting circuits 8A, 8B and 8C through the selector switch A/D converter 12, and also with the colour signals $S_B$, $S_G$ and $S_R$ through the selector switch 11 and the A/D converter circuit 13.

Accordingly, in the auto-focus control circuit 10, the amplitude values of the colour signals $S_B$, $S_G$ and $S_R$ from the A/D converter 12 can be detected, while the signal levels of the colour signals $S_B$, $S_G$ and $S_R$ from the A/D converter 13 can also be detected.

The image pick-up element 3, the preamplifying circuit 4, the signal processing circuit 5 and the matrix circuit 6 form image pick-up means that picks up an image of an object by means of the zoom lens 2. On the other hand, the band-pass filter circuits 7A, 7B and 7C, the detecting circuits 8A, 8B, and 8C, the selector switch 9 and the A/D converter 12 form amplitude value detecting means that detects the amplitude values of the colour signals $S_B$, $S_G$ and $S_R$ derived from the image pick-up means.

Moreover, the auto-focus control circuit 10 includes a table of values stored in internal memory (ROM) (not shown). In accordance with this table, the amplitude values of the colour signals $S_B$, $S_G$ and $S_R$ are divided by the signal levels of the corresponding colour signals $S_B$, $S_G$ and $S_R$ whereby the amplitude values are normalized by the signal levels.

In practice, the amplitude values of the colour signals $S_B$, $S_G$ and $S_R$ change not only with the position of the zoom lens 2 but also with the hue of the object. However, in this embodiment, since the amplitude values of the colour signals $S_B$, $S_G$ and $S_R$ are normalized by means of the signal levels of the colour signals $S_B$, $S_G$ and $S_R$, an object having a different hue can be properly focused positively when picked up.

Also, the auto-focus control circuit 10 is operative to compare the normalized amplitude values with respect to the respective colour signals $S_B$, $S_G$ and $S_R$, and feeds a control signal $S_{C2}$ to a focus position control circuit 15 on the basis of the compared result thereof, thereby controlling the focus of the zoom lens 2.

Figure 5 is a table representing the output characteristics, in which the normalized amplitude values $S_B'$, $S_G'$ and $S_R'$ of the respective colour signals $S_B$, $S_G$ and $S_R$ are illustrated in sequential relative level orders, that decrease in the order I, II and III. The table of Figure 5 is stored in the internal (ROM) memory in the auto-focus control circuit 10.

As can be seen in Figure 5, assuming that the zoom lens 2 is set at the properly-focused position P of green light $L_G$, then the green signal $S_G'$ has the maximum amplitude values as represented by I, and the blue and red signals $S_B'$ and $S_R'$ have amplitude values that are smaller than I but are equal to each other as represented by II.

If on the other hand the zoom lens 2 is set at the position B that is ahead of the properly-focused position P, the amplitude values of the green and red signals $S_G'$ and $S_R'$ are caused to decrease as represented by I and III, while the amplitude value of the blue signal $S_B'$ is caused to increase as represented by I in Figure 5. If the position of the zoom lens 2 is further advanced to the position A away from the properly-focused position P, the amplitude value of the blue signal $S_B'$ is at a maximum, and the amplitude values of the green and red signals $S_G'$ and $S_R'$ tend to decrease as represented by I, II and II, respectively.

Conversely, if the zoom lens 2 is set at the position C that is behind the properly-focused position P, the amplitude values of the green and blue signals $S_G'$ and $S_B'$ are caused to decrease as represented by I and III, and the amplitude value of the red signal $S_R'$ is caused to increase as represented by I in Figure 5.

If the position of the zoom lens 2 is further moved away from the properly-focused position P to the position D, the amplitude values of the blue and green signals $S_B'$ and $S_G'$ tend to decrease, and that of the red signal and $S_R'$ becomes a maximum as represented by III, II and I in Figure 5.

Consequently, the green signal $S_G'$ has the maximum amplitude value in a range from the position B to the position C with respect to the properly-focused position P. If the position of the zoom lens 2 is moved to the positions B and C that are ahead of and behind the properly-focused position P, the blue and red signals $S_B'$ and $S_R'$ have the maximum amplitude values, respectively.

Thus, it is possible for the auto-focus control circuit 10 to determine by the compared result of the normalized amplitude values of the colour signals $S_B'$, $S_G'$ and $S_R'$ derived from the respective colour signals $S_B$, $S_G$ and $S_R$ whether or not the focus position of blue light $L_B$ is moved towards the zoom lens 2 side, whether or not the focus position of red light $L_R$ is moved towards the image pick-up element 3 side, or whether or not green light $L_G$ is properly focused at the position P. It is also possible to detect by how much the position of the zoom lens 2 is displaced from the properly-focused position P of green light $L_G$.

Moreover, in the auto-focus control circuit 10, the focal length of the zoom lens 2 is detected by a zoom amount detecting circuit 17. The thus detected focal length is used to compensate the above-mentioned detected results.

In practice, in the zoom lens 2, the lengths $P_B$ and $P_R$ from the properly-focused position P of green light $L_G$ to the properly-focused positions A and D of blue light $L_B$ and red light $L_R$ are changed with the focal length of the zoom lens 2.

Accordingly, the properly-focused position P can be positively detected, or the displacement of green light $L_G$ from the properly-focused position P can be detected by compensating for the displacement from the properly-focused position P on the basis of the focal length of the zoom lens 2.

Therefore, by adjusting the position of the zoom lens 2 such that the displacement from the properly-focused position P falls below the predetermined value, it is possible to get the object in proper focus even if the object is moving fast, without wobbling the position of the zoom lens 2 or of the image pick-up element 3.

With this embodiment of the invention, since the position of the zoom lens 2 and of the image pick-up element 3 need not be wobbled, the overall arrangement of the apparatus can be simplified, and the quality of the picked-up image can be prevented from being deteriorated.

Thus, the auto-focus control circuit 10 forms a focus position information detecting means that detects focus position information to pick-up the object by means of the zoom lens 2, and by comparing the detected results of the normalized amplitude values of the respective colour signals $S_B$, $S_G$ and $S_R$ derived by dividing the amplitude values by the corresponding signal levels of the colour signals $S_B$, $S_G$ and $S_R$.

With this arrangement, an image of an object is focused on the target screen $H_f$ of the image pick-up element 3 through the zoom lens 2 having the predetermined, very small amount of chromatic aberration and the amplitude values of the colour signals $S_B$, $S_G$ and $S_R$ thereof are detected via the band-pass filter circuits 7A, 7B, and 7C and the detecting circuits 8A, 8B, and 8C.

Together with the colour signals $S_B$, $S_G$ and $S_R$, the amplitude values are supplied through the selecting circuits 9 and 11 and the A/D converters 12 and 13 to the auto-focus control circuit 10 that normalizes them by the signal levels of the colour signals $S_B$, $S_G$ and $S_R$ thereby producing the compared results. The compared results are compensated for on the basis of the focal length of the zoom lens 2, and the position of the zoom lens 2 is adjusted on the basis of the thus compensated result.

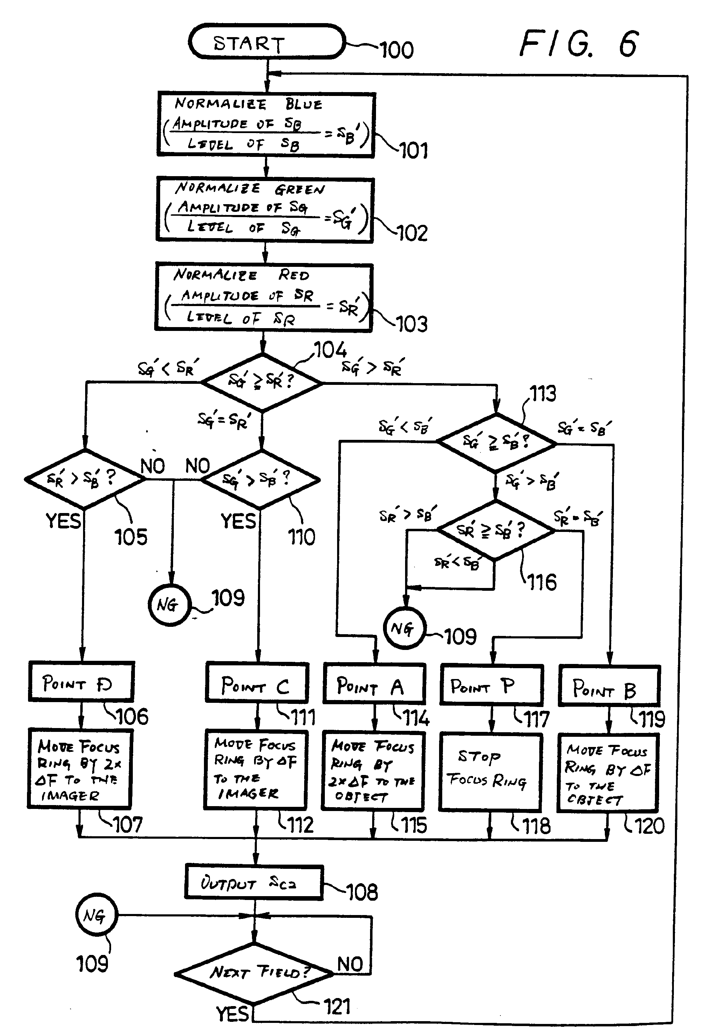

The operation of the auto-focus control circuit 10 in Figure 2 will now be described with reference to the flow chart of Figure 6.

When the auto-focus operation starts at step 100, the amplitude values of the blue, green and red colour signals $S_B$, $S_G$ and $S_R$ are respectively normalized by dividing them by the signal levels of the corresponding colour signals $S_B$, $S_G$ and $S_R$ at steps 101, 102 and 103.

Accordingly, normalized colour signals $S_B'$, $S_G'$ and $S_R'$ are obtained. Then, the values of the normalized red and green signals $S_R'$ and $S_G'$ are compared at step 104. If the normalized red signals $S_R'$ is greater than the normalized green signal $S_G'$, then the normalized red signal $S_R'$ is compared with the normalized blue signal $S_B'$ at step 105. If the normalized red signal $S_R'$ is greater than the normalized blue signal $S_B'$, then it is determined at step 106 that the zoom lens 2 is located at about the position D according to the table of Figure 5. Then, a control signal for moving the focus ring (not shown) of the zoom lens 2 by the amount 2 x $\Delta$F( F: minimum unit of the movement of the focus ring per one field of the colour signal, for example, 1 mm/field) towards the image pick-up element 3 is generated at step 107, and this control signal is supplied to the focus position control circuit 15 as the control signal $S_{C2}$ at step 108.

If the normalized red signal $S_R'$ is not greater than the normalized blue signal $S_B'$ at step 105, it is determined that this situation does not exist according to the table of Figure 5. Then, the routine goes to NG at step 109 and the focus ring of the zoom lens 2 is not moved.

Going back again to step 104, if the normalized green signal $S_G'$ is equal to the normalized red signal

$S_R'$, then the routine goes to step 110, wherein the normalized green signal $S_G'$ and the normalized blue signal $S_B'$ are compared. If the normalized green signal $S_G'$ is greater than the normalized blue signal $S_B'$, it is determined at step 111 that the zoom lens 2 is located at about the position C according to the table of Figure 5. Then, a control signal for moving the focus ring of the zoom lens 2 by the amount of $\Delta F$ in the direction of the image pick-up element 3 is generated at step 112, and this control signal is supplied to the focus position control circuit 15 as the control signal $S_{C2}$ at step 108.

If the normalized green signal $S_G'$ is not greater than the normalized blue signal $S_B'$ at step 110, then it is determined that this situation does not exist according to the table of Figure 5, and the routine goes to NG at step 109.

Returning to step 104 again, if the normalized green signal $S_G'$ is greater than the normalized red signal $S_R'$, the routine goes to step 113, wherein the normalized green signal $S_G'$ and the normalized blue signal $S_B'$ are compared. If the normalized green signal $S_G'$ is smaller than the normalized blue signal $S_B'$, it is determined at step 114 that the zoom lens 2 is located at about the position A according to the table of Figure 5. Then, a control signal for moving the focus ring of the zoom lens 2 by the amount $2 \times \Delta F$ in the direction of the object is generated at step 115, and this control signal is supplied to the focus position control circuit 15 as the control signal $S_{C2}$ at step 108.

If the normalized green signal $S_G'$ is greater than the normalized blue signal $S_B'$ at step 113, the routine goes to step 116, wherein the normalized red signal $S_R'$ and the normalized blue signal $S_B'$ are compared. If the normalized red signal $S_R'$ is greater or smaller than the normalized blue signal $S_B'$, it is determined that this situation does not exist according to the table of Figure 5, and the routine goes to NG at step 109. If the normalized red signal $S_R'$ is equal to the normalized blue signal $S_B'$, it is determined at step 117 that the zoom lens 2 is located at about the position P according to the table of Figure 5. Then, a control signal for stopping the focus ring of the zoom lens 2 is generated at step 118, and this control signal is supplied to the focus position control circuit 15 as the control signal $S_{C2}$ at step 108.

Going back to step 113, if the normalized green signal $S_G'$ equals the normalized blue signal $S_B'$, it is determined at step 119 that the zoom lens 2 is located at about the position B according to the table of Figure 5. Then, a control signal for moving the focus ring of the zoom lens 2 by the amount $\Delta F$ to the direction of the object is generated at step 120, and this control signal is supplied to the focus position control circuit 15 as the control signal $S_{C2}$ at step 108.

Each time the control signal $S_{C2}$ is supplied to the focus position control circuit 15 at step 108, it is determined at step 121 whether the next field of the colour signal has come by detecting vertical synchronizing signals (not shown) contained in the auto-focus control circuit 10. If so, the routine goes back to the beginning (step 100).

While the properly-focused positions of blue light $L_B$ and red light $L_R$ are respectively displaced towards the zoom lens 2 and the image pick-up element 3 from the properly-focused position P of green light $L_G$ by the predetermined very short lengths $P_B$ and $P_R$ in the above-mentioned embodiment, in other embodiments the properly-focused positions of blue light $L_B$ and red light $L_R$ may be respectively moved towards the image pick-up element 3 and the zoom lens 2.

The present invention can be applied to an apparatus that utilizes a lens with no zoom function. If so, the zoom amount detecting circuit 17 is not necessary, which simplifies the overall arrangement of the apparatus.

In the above-described embodiment the focus position information is detected on the basis of the amplitude values of the three colour signals $S_B$, $S_G$ and $S_R$ as described above, however, the present invention can be modified such that the amplitude values of, for example, the blue and red signals $S_B$ and $S_R$ only are employed to detect the focus position information.

While in the above embodiment the position of the zoom lens 2 is adjusted on the basis of the amplitude values of the colour signals as described above, the present invention is not limited to the above-mentioned embodiment and less advantageous embodiments can simultaneously use the prior art wobbling method.

While in the above embodiment the position of the zoom lens 2 is adjusted on the basis of the focus position information as described above, the invention can be applied to a wide variety of applications, for example, in which focus position information, is displayed.

The invention can also be applied to other apparatus such as an image pick-up apparatus, a camera and so on that are used to pick up a still picture.

## Claims

1.  Automatic focus control apparatus (1) characterized by:

    lens means (2) having chromatic aberration;

    means (3) for converting an optical signal obtained through said lens means (2) to an electrical signal;

    means (4,5) for processing said electrical signal to obtain a plurality of primary colour signals;

    means (7,8) for detecting the amplitude level of each of said primary colour signals;

    means (10) for generating a control signal according to levels of said primary colour signals derived from said level detecting means (7,8); and means (15) for controlling the position of said lens in response to said control signal.

2. Apparatus (1) according to a claim 1 wherein said primary colour signals are red, green and blue signals.

3. Apparatus (1) according to claim 1 or claim 2 wherein said detecting means (7,8) comprises separate series circuits of a filter (7) and a level detector (8) provided for each of said primary colour signals, and first switch means (9) for selectively supplying an output of said level detectors (8) to said control signal generating means (10).

4. Apparatus (1) according to claim 3 wherein said control signal generating means (10) normalizes the outputs of said level detectors (8) by respectively dividing said outputs by the amplitude levels of the corresponding primary colour signals supplied by said processing means (4,5).

5. Apparatus (1) according to claim 4 further comprising second switch means (11) for selectively supplying said primary colour signals to said control signal generating means (10).

6. Apparatus (1) according to claim 5 further comprising analogue-to-digital converter means (12,13) for separately converting the output of said first switch means (9) and the output of said second switch means (11).

7. Apparatus (1) according to claim 6 wherein said control signal generating means (10) includes stored information representing level orders of said primary colour signals versus each focus point of said primary colours, and wherein said control signal is generated according to said stored information.

8. Apparatus (1) according to any one of the preceding claims wherein said lens means (2) is a zoom lens (2) and said apparatus (1) further comprises means (17) for detecting the zoom amount of said zoom lens (2), the output of said zoom amount detecting means (17) being supplied to said control signal generating means (10) for compensation of said control signal.

9. Apparatus (1) according to claim 2 further comprising a matrix circuit (6) for converting said red, green and blue primary colour signals to a luminance signal and colour difference signals.

**Patentansprüche**

1. Gerät (1) zur automatischen Scharfeinstellung, gekennzeichnet durch:
eine Linseneinrichtung (2), die eine chromatische Aberration aufweist;
eine Einrichtung (3) zur Konvertierung eines optischen Signals, das durch die Linseneinrichtung (2) erhalten wird, in ein elektrisches Signal;
eine Einrichtung (4,5) zur Verarbeitung des elektrischen Signals, um eine Vielzahl von Hauptfarbensignalen zu erhalten: eine Einrichtung (7,8) zur Detektierung des Amplitudenpegels jedes der Hauptfarbensignale;
eine Einrichtung (10) zur Erzeugung eines Steuersignals entsprechend den Pegeln der Hauptfarbensignale, die von den Einrichtungen (7,8) zur Detektierung herstammen; und eine Einrichtung (15) zur Steuerung der Linsen als Antwort auf das Steuersignal.

2. Gerät (1) nach Anspruch 1, wobei die Hauptfarbensignale rote, grüne und blaue Signale sind.

3. Gerät (1) nach Anspruch 1 oder 2, wobei die Einrichtungen (7,8) zur Detektierung getrennte Serienschaltungen eines Filters (7) und eines Pegeldetektors (8) umfassen, die für jedes der Hauptfarbensignale vorgesehen sind, sowie eine Schaltereinrichtung (9) zur selektiven Lieferung eines Ausgangs des Pegeldetektors (8) zur Einrichtung (10) zur Erzeugung eines Steuersignals.

4. Gerät (1) nach Anspruch 3, wobei.die Einrichtung (10) zur Erzeugung des Steuersignals die Ausgangssignale der Pegeldetektoren (8) normiert, wobei jeweils die Ausgangssignale durch die Amplitudenpegel der entsprechenden Hauptfarbensignale dividiert werden, durch die die Einrichtungen (4,5) zur Verarbeitung beliefert werden.

5. Gerät (1) nach Anspruch 4, das weiter eine zweite Schaltereinrichtung (11) zur getrennten Lieferung der Hauptfarbensignale zur Einrichtung (10) zur Erzeugung eines Steuersignals umfaßt.

6. Gerät (1) nach Anspruch 5, das weiter Analog-Digital-Konvertierungseinrichtungen (12,13) zur getrennten Konvertierung des Ausgangssignals der ersten Schaltereinrichtung (9) und des Ausgangssignals der zweiten Schaltereinrichtung (11) aufweist.

7. Gerät (1) nach Anspruch 6, wobei die genannte Einrichtung (10) zur Erzeugung eines Steuersignals eine gespeicherte Information einschließt, die Pegelklassen der Hauptfarbensignale gegenüber jedem Brennpunkt der Hauptfarben darstellt, und wobei das Steuersignal entsprechend der gespeicherten Information erzeugt wird.

8. Gerät (1) nach einem der vorhergehenden Ansprüche, wobei die Linseneinrichtung (2) aus einer Zoomlinse (2) besteht und das Gerät (1) weiterhin eine Einrichtung (17) zur Detektierung des Zoombetrags der Zoomlinse (2) umfaßt, wobei das Ausgangssignal der Einrichtung (17) zur Detektierung des Zoombetrags die Einrichtung (10) zur Erzeugung eines Steuersignals zur Kompensation des Steuersignals beliefert.

9. Gerät (1) nach Anspruch 2, das weiterhin eine Matrixschaltung (6) zur Konvertierung der roten, grünen und blauen Hauptfarbensignale in Luminanzsignale und Farbdifferenzsignale umfaßt.

## Revendications

1. Appareil de commande automatique de mise au point (1), caractérisé par :
un moyen comportant des lentilles (2), qui posséde une certaine aberration chromatique ;
un moyen (3) servant à transformer en signal électrique un signal optique obtenu par l'intermédiaire dudit moyen à lentilles (2) ;
un moyen (4, 5) servant à traiter ledit signal électrique afin d'obtenir plusieurs signaux de couleurs primaires ;
un moyen (7, 8) servant à déterminer le niveau d'amplitude de chacun desdits signaux de couleurs primaires ;
un moyen (10) servant à produire un signal de commande en fonction des niveaux desdits signaux de couleurs primaires qui sont obtenus de la part dudit moyen de détermination de niveau (7, 8) ; et
un moyen (15) servant à commander la position desdites lentilles en fonction dudit signal de commande.

2. Appareil (1) selon la revendication 1, où lesdits signaux de couleurs primaires sont des signaux rouge, vert et bleu.

3. Appareil (1) selon la revendication 1 ou 2, où ledit moyen de détermination (7, 8) comprend des circuits série séparés formés d'un filtre (7) et d'un détecteur de niveau (8) qui sont prévus pour chacun desdits signaux de couleurs primaires, et un premier moyen de commutation (9) servant à délivrer sélectivement le signal de sortie desdits détecteurs de niveaux (8) audit moyen (10) de production de signal de commande.

4. Appareil (1) selon la revendication 3, où ledit moyen (10) de production de signal de commande normalise les signaux de sortie desdits détecteurs de niveau (8) en divisant respectivement lesdits signaux de sortie par les niveaux d'amplitude des signaux de couleurs primaires correspondants qui sont fournis par ledit moyen de traitement (4, 5).

5. Appareil (1) selon la revendication 4, comprenant en outre un deuxième moyen de commutation (11) qui sert à fournir sélectivement lesdits signaux de couleurs primaires audit moyen de production de signal de commande (10).

6. Appareil (1) selon la revendication 5, comprenant en outre des moyens convertisseurs analogique-numérique (12, 13) servant à convertir séparément le signal de sortie dudit premier moyen de commutation (9) et le signal de sortie dudit deuxième moyen de commutation (11).

7. Appareil (1) selon la revendication 6, où ledit moyen de production de signal de commande (10) comporte une information emmagasinée qui représente les ordres des niveaux desdits signaux de couleurs primaires en fonction de chacune des positions de mise au point desdites couleurs primaires, et où ledit signal de commande est produit en fonction de ladite information emmagasinée.

8. Appareil (1) selon l'une quelconque des revendications précédentes, où ledit moyen à lentilles (2) est un objectif à focale variable (2) et ledit appareil (1) comprend en outre un moyen (17) servant à détecter la quantité de variation de focale dudit objectif à focale variable (2), le signal de sortie dudit moyen (17) de détection de quantité de variation de focale étant fourni audit moyen de production de signal de commande (10) en vue de la compensation dudit signal de commande.

9. Appareil (1) selon la revendication 2, comprenant en outre un circuit matriciel (6) servant à convertir lesdits signaux de couleurs primaires rouge, vert et bleu en un signal de luminance et des signaux de différence de couleur.

# FIG. 1

# FIG. 3

# FIG. 2

EP 0 335 656 B1

# FIG. 4

# FIG. 5

| | A | B | P | C | D |
|---|---|---|---|---|---|
| $S_B'$ | I | I | II | III | III |
| $S_G'$ | II | I | I | I | II |
| $S_R'$ | III | III | II | I | I |

FIG. 6

START — 100

NORMALIZE BLUE
$\left(\dfrac{\text{AMPLITUDE OF } S_B}{\text{LEVEL OF } S_B} = S_B'\right)$ — 101

NORMALIZE GREEN
$\left(\dfrac{\text{AMPLITUDE OF } S_G}{\text{LEVEL OF } S_G} = S_G'\right)$ — 102

NORMALIZE RED
$\left(\dfrac{\text{AMPLITUDE OF } S_R}{\text{LEVEL OF } S_R} = S_R'\right)$ — 103

104
$S_G' < S_R'$   $S_G' \geqq S_R'$ ?   $S_G' > S_R'$

$S_G' = S_R'$

$S_R' > S_B'$ ?   NO   NO   $S_G' > S_B'$ ?

YES — 105   YES — 110

113
$S_G' < S_B'$   $S_G' \geqq S_B'$ ?   $S_G' = S_B'$

$S_G' > S_B'$

$S_R' > S_B'$   $S_R' \geqq S_B'$ ?   $S_R' = S_B'$

$S_R' < S_B'$ — 116

NG — 109

NG — 109

POINT D — 106
POINT C — 111
POINT A — 114
POINT P — 117
POINT B — 119

MOVE FOCUS RING BY 2× ΔF TO THE IMAGER — 107

MOVE FOCUS RING BY ΔF TO THE IMAGER — 112

MOVE FOCUS RING BY 2×ΔF TO THE OBJECT — 115

STOP FOCUS RING — 118

MOVE FOCUS RING BY ΔF TO THE OBJECT — 120

OUTPUT $S_{C2}$ — 108

NG — 109

NEXT FIELD?   NO
YES — 121